# EUROPÄISCHE PATENTSCHRIFT

(11) **EP 3 684 655 B1**
(45) Veröffentlichungstag und Bekanntmachung des Hinweises auf die Patenterteilung: **28.04.2021**
(21) Anmeldenummer: 18734499.9
(22) Anmeldetag: 20.06.2018
(51) Int. Cl.: B60R 21/36, B60R 21/38, B60R 21/231, B60R 21/233, B60R 21/2338, B60R 21/16

(54) **GASSACKANORDNUNG FÜR EIN KRAFTFAHRZEUG**
AIRBAG ASSEMBLY FOR A MOTOR VEHICLE
ARRANGEMENT DE COUSSIN GONFLABLE POUR UN VÉHICULE AUTOMOBILE

(30) Priorität: 20.09.2017 DE 102017008818
(43) Veröffentlichungstag der Anmeldung: 29.07.2020
(73) Patentinhaber: Daimler AG, 70372 Stuttgart (DE)
(72) Erfinder: CLAUSS, Yves, 14482 Potsdam (DE); HEINRICH, Till, 70197 Stuttgart (DE); KALLISKE, Ingo, 14476Potsdam (DE); PORSTMANN, Marco, 16548 Glienicke/Nordbahn (DE); STEINKE, Norman, 10785 Berlin (DE)
(74) Vertreter: JENSEN & SON
(86) Internationale Anmeldenummer: PCT/EP2018/066424
(87) Internationale Veröffentlichungsnummer: WO 2019/057355

(56) Entgegenhaltungen:
- EP-A1- 1 479 574
- EP-A1- 2 105 358
- JP-A- H07 108 903
- JP-A- H07 125 606

## Beschreibung

Die Erfindung betrifft eine Gassackanordnung für ein Kraftfahrzeug, insbesondere zum Schutz einer außerhalb des Kraftfahrzeugs befindlichen Person, nach dem Oberbegriff des Anspruchs 1 sowie ein Kraftfahrzeug mit einer solchen Gassackanordnung.

Eine derartige Gassackanordnung umfasst einen Gassack, welcher durch Befüllen mit einem von einem Gasgenerator bereitgestellten Gas von einem unbefüllten Ausgangszustand in einen entfalteten Zustand aufblasbar ist, und eine Einhüllung, innerhalb derer der Gassack im Ausgangszustand vor und im entfalteten Zustand nach dem Befüllen angeordnet ist.

Solche Gassackanordnungen können z.B. als Antrieb zum Auslenken eines Teiles einer Außenhaut eines Kraftfahrzeugs zum Schutz der außerhalb des Fahrzeugs befindlichen Person eingesetzt werden. Durch das Auslenken des Teiles der Außenhaut, z.B. einer Motorhaube, in einem Crashfall wird die Möglichkeit geschaffen, dass die Aufprallenergie der darauf aufprallenden Person kontrolliert abgebaut (durch die Bewegung bzw. Deformation der Motorhaube entgegen der Auslenkrichtung) und ein Kontakt mit darunter gelegenen starren Kraftfahrzeugkomponenten (z.B. einem Motorblock) vermindert oder gar vermieden werden kann.

Aus der DE 10 2014 010 872 A1 sind längliche Gassäcke bekannt, die zur Abdeckung jeweils einer von zwei A-Säulen des Kraftfahrzeugs dienen und gleichzeitig als Aktuatoren zum Auslenken der Motorhaube fungieren. Dazu werden die Gassäcke jeweils von einem Gewebeschlauch als Einhüllung umgeben, welcher sich beim Befüllen der Gassäcke in seiner Erstreckungsrichtung entlang der A-Säulen verkürzt und so eine Zugkraft in die Motorhaube zu deren Auslenkung einleitet. Bei einer derartigen Anordnung müssen sowohl der Gassack als auch der umgebende Gewebeschlauch im Nichtgebrauchszustand (nicht aktivierter Zustand) in der A-Säule untergebracht werden. Durch den relativ geringen Querschnitt der A- Säule steht dazu jedoch nur ein begrenzter Unterbringungsraum zur Verfügung, was die Größe des Gassackes stark einschränkt. Diese, vor allem in der Dimension quer zur Erstreckungsrichtung der A-Säule, ist aber maßgebend für die erreichbare Verkürzung des Gewebeschlauches und damit letztendlich entscheidend für das Maß der Auslenkung der Motorhaube. Somit erlauben solche Anordnungen lediglich eine geringe Verlagerung der Motorhaube, was das Schutzpotential für eine aufprallende Person stark einschränkt.

In der WO 2004/007247 A2 werden verschiedene unterhalb der Motorhaube angeordnete Aktuatoren zum Auslenken der Motorhaube beschrieben, die eine ausreichende Verlagerung der Motorhaube bewirken können. Zur Abdeckung von benachbart zur Motorhaube angeordneten Kraftfahrzeugkomponenten (z.B. A-Säulen), welche ebenfalls im Aufprallbereich liegen können, müssen aber gegebenenfalls zusätzliche Maßnahmen getroffen werden.

Des Weiteren zeigt die EP 1 479 574 A1 einen Airbag der im Außenbereich eines Kraftfahrzeugs vor dem Befüllen an einem Ende einer Fahrzeugsäule angeordnet ist und sich beim Befüllen entlang der Fahrzeugsäule entfaltet, wobei die Vorrichtung über einen stabförmigen Führungsmechanismus verfügt, an dem sich der Airbag entlang bewegt. Der Airbag verfügt hierzu über Verbindungslaschen, die am Führungsstab entlang gleiten und damit den Airbag beim Entfalten am Führungsstab halten.

Die EP 2 105 358 A1 hingegen zeigt eine Airbag-Anordnung außen an einer vorderen Kraftfahrzeugsäule, bei der der Airbag vor dem Befüllen bereits gefaltet entlang der Kraftfahrzeugsäule angeordnet ist und über eine erste und eine zweite Befestigungsvorrichtung am äußeren Rand des Airbags mit dem Fahrzeug verbunden ist. Die Befestigungsvorrichtungen halten den Airbag auch nach dem Befüllen auf einer Seite des Airbags entlang der Kraftfahrzeugsäule, so dass sich der Airbag aus dem gefalteten Zustand entlang der Kraftfahrzeugsäule im Wesentlichen quer dazu entfalten kann.

Der Erfindung liegt das Problem zugrunde, eine Gassackanordnung mit einer verbesserten Schutzwirkung in einem Crashfall bereitzustellen.

Gelöst wird dieses Problem durch eine Gassackanordnung gemäß Anspruch 1.

Danach ist vorgesehen, dass der Gassack so beschaffen und am Kraftfahrzeug anordenbar ist, dass er sich im unbefüllten Zustand in einem Endbereich der Einhüllung und/oder einer insbesondere länglichen Fahrzeugsäule des Kraftfahrzeugs befindet und durch das Befüllen innerhalb der Einhüllung und/oder längs entlang zumindest eines Abschnitts der Einhüllung und/oder der Fahrzeugsäule in Richtung eines zweiten Endes der Einhüllung und/oder der Fahrzeugsäule entfaltbar ist.

Im Endbereich der Einhüllung und/oder der Fahrzeugsäule kann ein besonders großer Bauraum zur Verfügung gestellt werden. Durch die Anordnung im Endbereich der Einhüllung und/oder der Fahrzeugsäule können bei der Gassackanordnung besonders große Gassäcke eingesetzt werden, welche eine besonders gute Schutzwirkung in einem Crashfall bereitstellen können. Durch die Anordnung des Gassacks in der Einhüllung kann erreicht werden, dass sich der Gassack beim Befüllen mit Gas entlang der Einhüllung und damit gezielt entlang der Fahrzeugsäule entfaltet und diese überdeckt. Hierbei sind größere Gassackquerschnitte möglich als bei den bekannten Gassackanordnungen. Mit einer solchen Gassackanordnung ist ein Teil einer Außenhaut eines Kraftfahrzeugs mit einem vergrößerten Auslenkweg auslenkbar. Der Gassack ist vor dem Befüllen mit Gas vorzugsweise an nur einem der beiden Enden der Einhüllung angeordnet und von dem anderen der beiden Enden beabstandet. Durch Befüllen mit Gas ist der Gassack von dem einen Ende der Einhüllung ausgehend zu dem anderen Ende der Einhüllung hin aufblasbar.

Die Einhüllung ist gemäß einer Ausführung an einem bewegbaren Teil des Kraftfahrzeugs festlegbar oder festgelegt, insbesondere mit einem z.B. längsseitigen Endbereich. Hierdurch können Zugkräfte der Einhüllung, z.B. durch deren Kontraktion, in das bewegbare Teil eingeleitet werden. Die Gassackanordnung umfasst hierzu beispielsweise jeweils mindestens eine am ersten und/oder am zweiten Ende der Einhüllung festgelegte Befestigungseinrichtung.

Bei dem bewegbaren Teil handelt es sich z.B. um ein Teil einer Außenhaut des

Kraftfahrzeugs, insbesondere um eine Fahrzeughaube, z.B. um eine Motorhaube oder eine Kofferraumklappe, oder um ein dem bewegbaren Teil zugeordnetes (z.B. damit verbindbares oder verbundenes) Scharnier. Durch die Gassackanordnung kann ein solches bewegbares Teil z.B. aufgestellt werden, um eine verbesserte Schutzwirkung für außerhalb des Fahrzeugs befindliche Personen zu erzielen.

Es kann vorgesehen sein, dass sich der Gassack vor dem Befüllen mit Gas nur über höchstens die Hälfte oder höchstens ein Drittel der Längsausdehnung der Einhüllung und/oder der Längsausdehnung der Fahrzeugsäule erstreckt. Bei derartigen Größenverhältnissen ist eine besonders effiziente Entfaltung des Gassacks möglich.

Alternativ oder zusätzlich kann vorgesehen sein, dass sich der Gassack in seinem mit Gas befüllten Zustand über mindestens ein Drittel oder mindestens die Hälfte der Längsausdehnung der Einhüllung und/oder der Fahrzeugsäule erstreckt, z.B. im Wesentlichen über die gesamte Längsausdehnung der Einhüllung und/oder der Fahrzeugsäule. Auf diese Weise ist eine besonders gute Schutzwirkung erzielbar.

Der Gassack kann vor dem Befüllen an oder in einem (z.B. bezogen auf die Fahrzeughöhenrichtung unteren oder oberen) Endabschnitt der Fahrzeugsäule anordenbar sein. Beispielsweise ist der Gassack in einem oder benachbart zu einem unteren Bereich, oder in einem oder benachbart zu einem oberen Bereich einer A-Säule im Kraftfahrzeug angeordnet. An diesen Einbaupositionen kann je nach Fahrzeugausführung ein besonders großer Gassack untergebracht werden.

Bei der Einhüllung handelt es sich z.B. um einen Gewebeschlauch. Der Gewebeschlauch kann den sich entfaltenden Gassack hinsichtlich seiner Entfaltungsrichtung führen.

Die Einhüllung kann ein netzartiges Material umfassen oder aus einem netzartigen Material bestehen. Netzartige Materialien können sich besonders gut spreizen lassen.

Die Einhüllung ist beispielsweise länglich mit einer Längsausdehnung ausgebildet. Ein Befüllen des Gassacks kann eine Verkürzung der Längsausdehnung der Einhüllung bewirken. Insbesondere durch den Einsatz eines netzartigen Materials (z.B. in Form eines schlauchförmigen Netzes) kann der Gewebeschlauch durch den Gassack gedehnt und dadurch in der Länge kontrahiert werden, z.B. indem Maschen des netzartigen Materials gespreizt und damit in der Länge kontrahiert werden.

Die Einhüllung kann sich entlang der Fahrzeugsäule erstrecken, wenn die Gassackanordnung bestimmungsgemäß am Kraftfahrzeug montiert ist. Beispielsweise ist die Einhüllung so ausgebildet, dass sie in einer Aufnahme in einer Fahrzeugsäule einsetzbar ist, z.B. ist die Einhüllung im Wesentlichen passgenau zur Form der Aufnahme ausgebildet.

Teile der Gassackanordnung können von einer zumindest teilweise flexiblen Umhüllung umgeben sein. Insbesondere können der Gassack und/oder die Einhüllung zumindest abschnittsweise, insbesondere zumindest überwiegend, von einer zumindest teilweise flexiblen Umhüllung umgeben sein. Eine solche Umhüllung kann die Einhüllung und den Gassack vor Umwelteinflüssen schützen und den Einbau der Gassackanordnung in dem Kraftfahrzeug erleichtern.

Die Umhüllung ist z.B. als unter Hitzeeinwirkung schrumpfende Umhüllung ausgebildet. Beispielsweise ist die Umhüllung ein Schrumpfschlauch, optional mit einer Beschichtung an der Innenseite. Hierdurch können die Einhüllung und/oder der Gassack bei der Herstellung einfach in die noch nicht geschrumpfte Umhüllung eingeführt werden. Daraufhin wird die Umhüllung durch Hitzeeinwirkung geschrumpft, sodass ein insbesondere leicht einzubauendes Paket entsteht.

Der Gassack weist beispielsweise mindestens zwei Kammern auf. Der Gassack kann als Zweikammergassack ausgebildet sein. Die Kammern sind z.B. durch eine Durchtrittsöffnung miteinander verbunden. Hierdurch kann eine zeitlich versetzte Entfaltung einer ersten und einer zweiten Kammer erreicht werden. Abgesehen von der Öffnung sind die beiden Kammern voneinander getrennt, z.B. durch mindestens eine Materiallage des Gassacks.

Gemäß einer Weiterbildung ist vorgesehen, dass, insbesondere in Bezug auf einen nicht aufgeblasenen, flach ausgebreiteten Zustand des Gassacks, eine der beiden Kammern die andere der beiden Kammern zumindest teilweise umgibt. Eine der beiden Kammern kann in die andere der beiden Kammern hineinragen. Die erste Kammer kann die zweite Kammer nahezu vollständig durchdringen. Beispielsweise nimmt eine der beiden Kammern die andere der beiden Kammern zumindest teilweise in sich auf. Hierdurch kann eine zeitlich versetzte Entfaltung des Gassacks zuerst im Wesentlichen in einer Längsrichtung (insbesondere in Längsrichtung der Einhüllung) und danach im Wesentlichen in einer Breitenrichtung erzielt werden, etwa indem zuerst die innere Kammer und daraufhin die zweite Kammer aufgeblasen wird.

Gemäß einem weiteren Aspekt der vorliegenden Erfindung wird ein Kraftfahrzeug bereitgestellt, das eine Gassackanordnung oder mehrere, insbesondere zwei Gassackanordnungen gemäß einer beliebigen hierin beschriebenen Ausführung umfasst.

Die Erfindung wird nachfolgend unter Bezugnahme auf die Figuren anhand von Ausführungsbeispielen näher erläutert werden. Es zeigen:
- Fig. 1: ein Ausführungsbeispiel einer bestimmungsgemäß an einem Kraftfahrzeug angeordneten Gassackanordnung mit einem Gassack in einem nicht aufgeblasenen Zustand in einer schematischen Darstellung;
- Fig. 2: die Gassackanordnung gemäß Fig. 1 mit dem Gassack in einem aufgeblasenen Zustand;
- Fig. 3: die Gassackanordnung im nicht aufgeblasenen Zustand gemäß Fig. 1 vor einem Einbau in ein Kraftfahrzeug in einer schematischen Darstellung;
- Fig. 4: der Gassack der Gassackanordnung gemäß Fig. 1 bis 3 in einer schematischen Darstellung;
- Fig. 5: einen Endabschnitt einer als Gewebeschlauch ausgebildeten Umhüllung der Gassackanordnung in einer schematischen Darstellung; und
- Fig. 6: ein weiteres Ausführungsbeispiel einer bestimmungsgemäß an einem Kraftfahrzeug angeordneten Gassackanordnung mit einem Gassack in einem nicht aufgeblasenen Zustand in einer schematischen Darstellung.

Die nachfolgenden Erläuterungen erfolgen anhand der Darstellung einer (einzelnen) Gassackanordnung 1 zum Auslenken eines Teils einer Außenhaut eines Kraftfahrzeugs 2 zum Schutz einer außerhalb des Kraftfahrzeugs 2 befindlichen Person. Es wird darauf hingewiesen, dass mehrere, z.B. zwei Gassackanordnungen 1 vorgesehen sein können, z.B. jeweils im Bereich von A-Säulen 22 des Kraftfahrzeugs 2 beidseitig einer Windschutzscheibe 23.

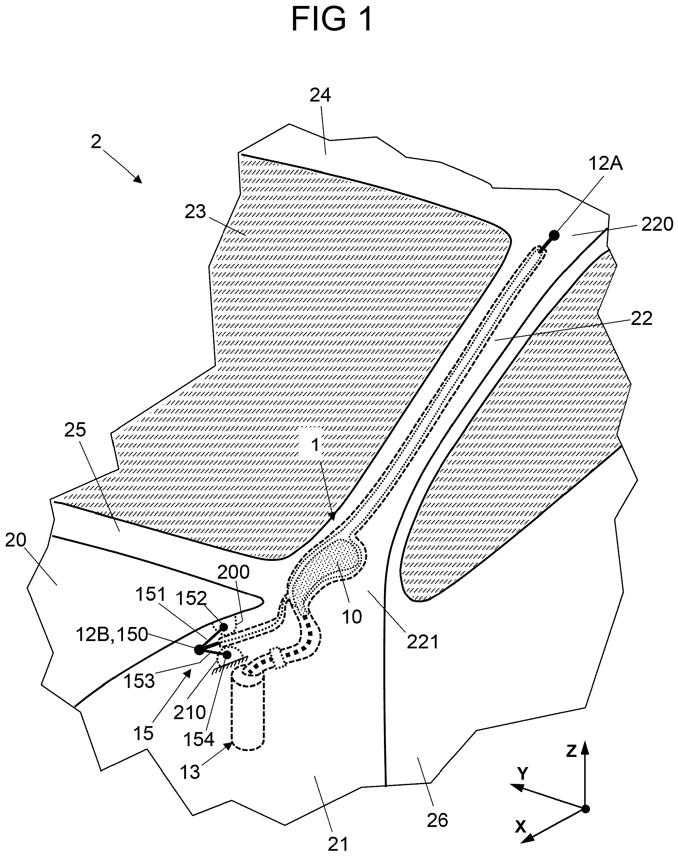

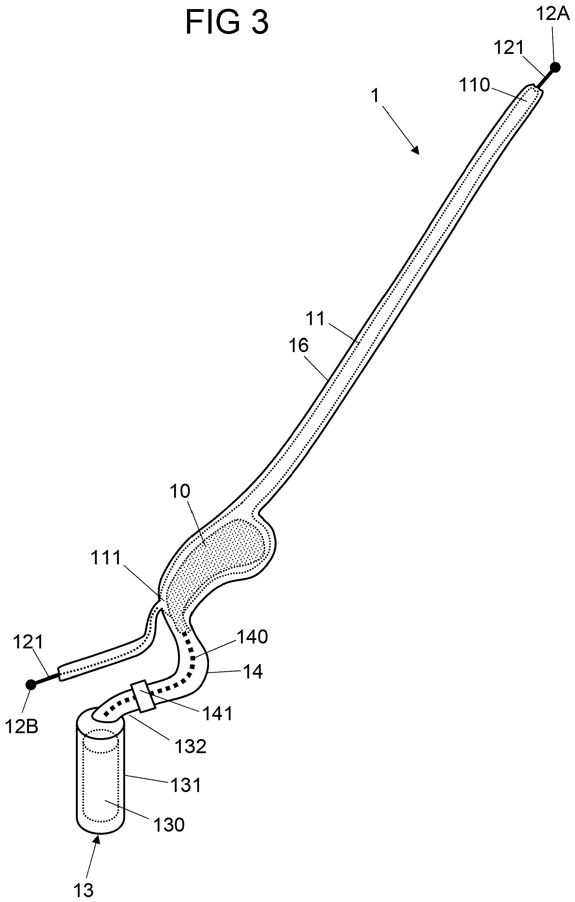

Fig. 1 und 3 zeigen die Gassackanordnung 1 im nicht aktivierten Zustand. Während die Fig. 1 die Gassackanordnung 1 in einem im Kraftfahrzeug 2 eingebauten Zustand darstellt, zeigt die Fig. 3 die Gassackanordnung 1 im Zustand vor dem Einbau und in einer vergrößerten Darstellung.

Die Gassackanordnung 1 umfasst einen in einer Einhüllung 11 untergebrachten Gassack 10. Die Gassackanordnung 1 umfasst ferner eine Gasgeneratorbaugruppe 13, die zum Aufblasen des Gassacks 10 über eine Gasführung 14 an den Gassack 10 angeschlossen ist. Die Einhüllung 11 ist mit zwei Befestigungseinrichtungen 12A, 12B am Kraftfahrzeug 2 festlegbar. Die Einhüllung ist vorliegend als Gewebeschlauch 11 ausgebildet. Der Gassack 10, die Einhüllung 11 und die Gasführung 14 sind innerhalb einer Umhüllung 16 angeordnet.

Vorliegend ist die Gassackanordnung 1 mit ihrem gasgeneratorseitigen Ende fahrzeugfest (z.B. am Längsträger) angeordnet. Die Gassackanordnung 1 ist in der Nähe des unteren Endes 221 einer Fahrzeugsäule 22 des Kraftfahrzeugs 2 am Kraftfahrzeug festgelegt. Vorliegend ist die Gassackanordnung 1 im Bereich eines Kotflügels 21 in der Nähe des unteren Endes 221 der als A-Säule 22 ausgebildeten Fahrzeugsäule des Kraftfahrzeugs 2 am Kraftfahrzeug 2 festgelegt. Ausgehend von ihrem gasgeneratorseitigen Ende erstreckt sich die Gassackanordnung 1 über das untere Ende 221 der A-Säule 22, entlang dieser, bis zu deren oberen Ende 220. Gemäß Fig. 1 erstreckt sich die Gassackanordnung 1 bis zu einem an das obere Ende 220 der A-Säule 22 angrenzenden Bereich eines Fahrzeugdaches 24. Die Bezeichnungen oberes und unteres Ende 220, 221 beziehen sich jeweils auf deren Lage/Position bezüglich einer Fahrzeughöhenachse z. Die Fahrzeughöhenachse z bildet mit einer Fahrzeugquerachse y und einer Fahrzeuglängsachse x die Koordinatenachsen eines rechtwinkligen Koordinatensystems. Die A-Säule 22 erstreckt sich zwischen einer Windschutzscheibe 23 und einer Fahrzeugtür 26.

Wie insbesondere in Fig. 3 gezeigt, umfasst die Gasgeneratorbaugruppe 13 einen Gasgenerator 130. Der Gasgenerator 130 ist in einem Gehäuse 131 angeordnet. Das Gehäuse 131 ist mit nicht dargestellten Durchbrüchen für die Durchführung einer Zündelektrik des Gasgenerators 130 und/oder für den Gasaustritt (z.B. zwischen einem Deckel und dem Gehäusekorpus oder im Deckel oder Gehäusekorpus selbst) nach der Aktivierung des Gasgenerators 130 versehen. Das Gehäuse 131 ist mit ebenfalls nicht dargestellten Befestigungsmöglichkeiten zur Festlegung des Gehäuses 131 im Fahrzeug 2 versehen.

Die Umhüllung 16 bildet eine Verzweigung aus. Ein Zweig der Verzweigung verläuft entlang der Gasführung 14. Über ein geeignetes Befestigungsmittel, z.B. in Form der dargestellten Schelle 141, ist die Umhüllung 16 der Gassackanordnung 1 mit ihrem die Gasführung 14 ausbildenden Bereich mit einem Gasaustritt 132 der Gasgeneratorbaugruppe 13 fest verbunden. Zur Leitung der von dem Gasgenerator 130 freigesetzten Gase können der Gasaustritt 132 und/oder die Gasführung 14 mit integrierten Kanälen oder separaten gasleitenden Elementen versehen sein. Vorliegend umfasst die Gasführung 14 eine Gasleitung 140. Die Gasleitung 140 ist innerhalb der Umhüllung 16 angeordnet.

An die Gasführung 14 schließt sich ein in seinem Querschnitt (gegenüber der Gasführung 14) verbreiterter Bereich der Umhüllung 16 an. Der verbreiterte Bereich der Umhüllung 16 weist in Erstreckungsrichtung entlang der A-Säule 22 nur eine geringe Länge (im Vergleich zur Gesamtlänge der Umhüllung 16) auf. Dieser Bereich größeren Querschnitts dient der Aufnahme des Gassackes 10. Der Gassack 10 ist in seinem nicht aktivierten Zustand zusammengefaltet.

In dem im Fahrzeug 2 verbauten Zustand der Gassackanordnung 1 ist der Gassack 10 an einem unteren Ende 221 der A-Säule 22 angeordnet, da dort für gewöhnlich die A-Säule 22 einen größeren Querschnitt aufweist, also mehr Bauraum für die Unterbringung des Gassackes 10 vorhanden ist.

Bezüglich der Fahrzeugumgebung ist die Gassackanordnung 1 durch Verkleidungselemente (Zierelemente) abgedeckt, welche im Crashfall eine Entfaltung des Gassackes 10 gestatten. Der sich entfaltende Gassack 10 kann die Verkleidungselemente verdrängen und sich zur Außenseite des Kraftfahrzeugs 2 hin entfalten.

Im weiteren Verlauf (insbesondere bis zum oberen Ende 220 der A-Säule 22) weist die Umhüllung 16 wieder einen geringeren Querschnitt auf und kann so problemlos in der A-Säule 22 untergebracht werden. Der geringere Querschnitt wird dadurch möglich, dass in diesem Bereich lediglich der den Gassack 10 umgebende Gewebeschlauch 11 von der Umhüllung 16 aufgenommen ist, nicht der Gassack 10. Der Gewebeschlauch 11 erstreckt sich ausgehend vom gefalteten Gassack 10 bis zum oberen Ende 220 der A-Säule 22. Der Abschnitt geringeren Querschnitts der Gassackanordnung 1 ist innerhalb der A-Säule 22 angeordnet, z.B. in einem dafür vorgesehenen, insbesondere längserstreckten Unterbringungsraum.

Die als Gewebeschlauch 11 ausgebildete Einhüllung ist länglich. Der gefaltete Gassack 10 ist im Bereich eines längsseitigen ersten Endes 111 (hier das untere Ende) des Gewebeschlauchs 11 angeordnet. Der gefaltete Gassack 10 ist von einem dem ersten (unteren) Ende des Gewebeschlauchs 11 gegenüberliegenden längsseitigen zweiten (hier oberen) Ende 110 beabstandet angeordnet. Der Abstand zwischen dem gefalteten Gassack 10 und dem zweiten (oberen) Ende 110 des Gewebeschlauchs 11 entspricht in etwa der Länge der A-Säule 22.

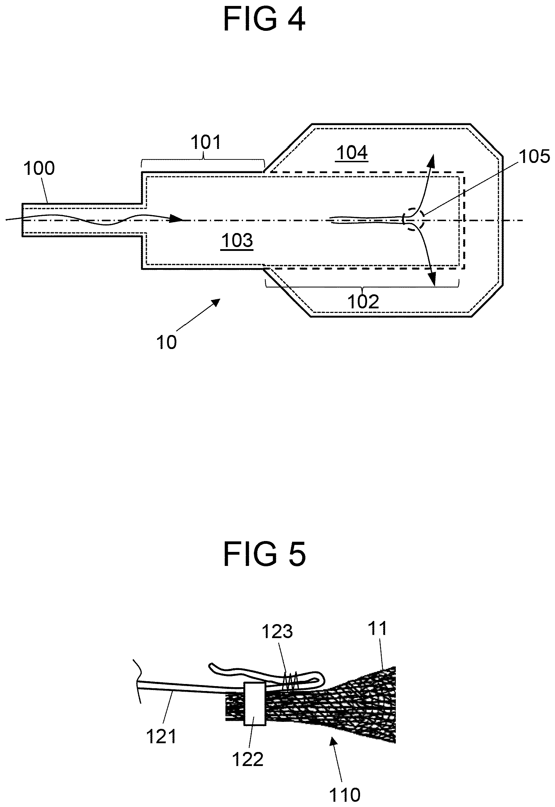

Das Gewebe des Gewebeschlauches 11 ist netzartig ausgebildet. Das netzartige Gewebe des Gewebeschlauches 11 weist eine relativ große Maschenweite auf, z.B. von mehr als 1 mm oder mehr als 1 cm. Mit seinem oberen Ende 110 ist der Gewebeschlauch 11 fahrzeugfest am oberen Ende 220 der A-Säule 22 oder an einem daran angrenzenden Bereich des Fahrzeugdaches 24 festgelegt. Dazu ist es mit einer Befestigungseinrichtung 12A versehen, z.B. in Form eines Haltebandes 121 mit einer daran befestigten Metalllasche 120. Die Befestigungseinrichtung 12A ragt vorliegend aus der Umhüllung 16 heraus. Ein Beispiel einer solchen Befestigungseinrichtung 12A zeigt Fig. 5. Alternativ zum Halteband 121 kann die Metalllasche 120 auch direkt am Ende 110 des Gewebeschlauchs 11 befestigt sein.

Die Anordnung des gefalteten Gassackes 10 im Gewebeschlauch 11 beim Zusammenbau derGassackanordnung kann über die noch offenen Enden 110, 111 des Gewebeschlauches 11e rfolgen. Alternativ ist eine Zuführung auch über eine schlitzförmige Öffnung im Gewebeschlauch 11 möglich.

Mit seinem entgegengesetzten, unteren Ende 111 ist der Gewebeschlauch 11 an einer Fahrzeughaube, hier in Form einer Motorhaube 20 des Kraftfahrzeugs 2 festgelegt, bevorzugt an einem der Motorhaube 20 zugeordneten Scharnier 15. Vorliegend ist der Gewebeschlauch 11 über das Scharnier 15 mit der Motorhaube 20 verbunden. Eine Befestigungseinrichtung 12B zur Befestigung an der Motorhaube 20 oder an dem Scharnier 15 kann identisch mit der im Zusammenhang mit der Befestigung des oberen Endes 110 des Gewebeschlauchs 11 beschriebenen Befestigungseinrichtung 12A ausgeführt sein. Konstruktiv bedingt weist das Halteband 121 hier jedoch eine größere Länge auf (als an der oberen Befestigungseinrichtung 12A) und wird vorzugsweise durch die Umhüllung 16 umgeben.

Bei dem vorliegenden, beispielhaften Scharnier 15 ist ein erstes Scharnierelement 151 der Motorhaube 20 zugeordnet, insbesondere mit einem Ende schwenkbar an dieser befestigt. Vorliegend stellt die Motorhaube 20 eine Befestigungsstelle 200 bereit, an welcher das erste Scharnierelement 151 (mit einer Anbindungsstelle 152) schwenkbar befestigt ist. Ein zweites Scharnierelement 152 ist mit einem Ende schwenkbar an einem fahrzeugfesten Element angelenkt. Vorliegend wird eine durch den Kotflügel 21 abgedeckte Befestigungsstelle 210 bereitgestellt, an welcher das zweite

Scharnierelement 152 (mit einer Anbindungsstelle 154) schwenkbar befestigt ist.

Mit ihren jeweils anderen (den Anbindungsstellen 152, 154 gegenüberliegenden) Enden sind die beiden Scharnierelemente 151, 152 zueinander schwenkbar miteinander verbunden, vorliegend mittels eines Gelenks 150. An diesem Bereich (hier dem Gelenk 150) ist vorliegend auch der Gewebeschlauch 11 mit seinem unteren Ende 111 über die untere Befestigungseinrichtung 12B (über das zugeordnete Halteband 121 und die Metalllasche 120) festgelegt.

In dem in Fig. 1 gezeigten, nicht aktivierten Zustand der Gassackanordnung 1 ist die Motorhaube 20 für den Zugang zu einem Motorraum (beispielsweise für Wartungsarbeiten) nach der Lösung einer Entriegelung im nicht dargestellten Frontbereich des Fahrzeugs 2 um eine Schwenkachse parallel zur Fahrzeugquerachse y schwenkbar. Die Schwenkachse wird dabei durch das Scharnier 15 bestimmt. Vorliegend kann die Schwenkachse z.B. durch den Anlenkpunkt des ersten Scharnierelementes 151 des (gezeigten und des in y-Richtung gegenüberliegenden) Scharniers 15 an der Befestigungsstelle 200 der Motorhaube 20 verlaufen. Das Scharnier 15 ist bevorzugt verriegelbar ausgeführt. Im verriegelten Zustand ist das Scharnier 15 am Gelenk 150 nicht schwenkbar. Alternativ bildet das Gelenk 150 die Schwenkachse aus.

Die Umhüllung 16 dient dem Schutz der Gassackanordnung 1 vor Staub, Feuchtigkeit und anderen Umgebungseinflüssen. Bevorzugt wird die Umhüllung 16 mittels eines entsprechend dimensionierten Schrumpfschlauches aus einem thermoplastischen Kunststoff realisiert. Die Umhüllung 16 kann auf ihrer Innenseite zur besseren Abdichtung mit einem Heißkleber versehen sein. Insbesondere kann vorgesehen sein, dass sich die Umhüllung 16 unter Hitzeeinwirkung an die zu umhüllenden Teile (z.B. den Gewebeschlauch 11 und den Gassack 10) anlegt. Diese Ausführung ist formgebend für die Gassackanordnung 1, ermöglicht aber gleichzeitig eine (gewisse) Flexibilität entlang der Erstreckungsrichtung. So wird der problemlose Einbau der Gassackanordnung 1 in das Fahrzeug 2 ermöglicht. Partiell können versteifende Elemente an und/oder in der Umhüllung vorgesehen sein.

Mittels der Gassackanordnung 1 kann ein Teil der Außenhaut des Kraftfahrzeugs 2, insbesondere im Frontbereich des Kraftfahrzeugs 2, vorliegend die Motorhaube 20 des Kraftfahrzeugs 2, gegenüber dem übrigen Kraftfahrzeug 2 ausgelenkt, insbesondere aufgestellt werden. Zusätzlich kann die Gassackanordnung 1 eine Polsterung einer Fahrzeugsäule 22 bereitstellen, wie nachfolgend erläutert werden wird, sodass eine besonders wirksame Schutzwirkung erzielbar ist.

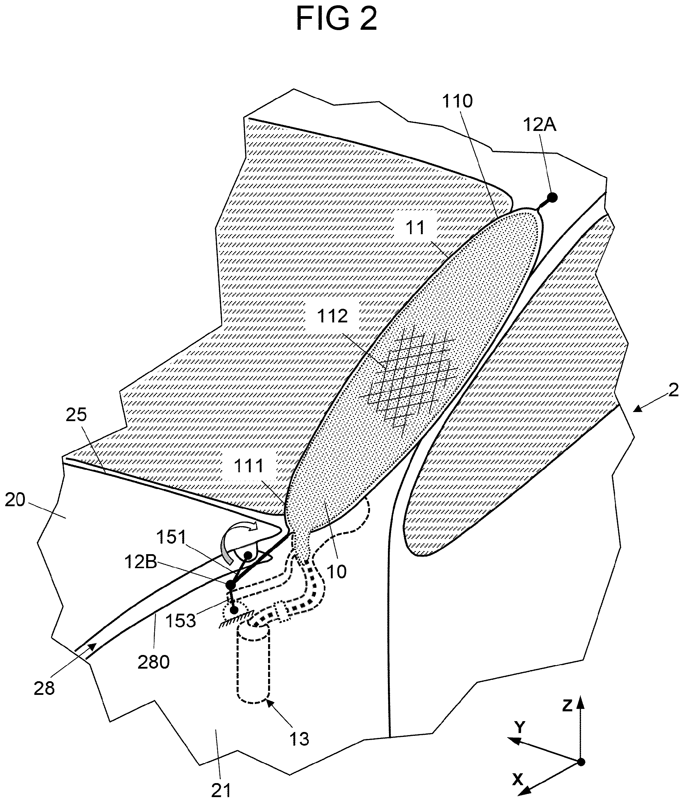

In Fig. 2 ist die Gassackanordnung 1 gemäß Fig. 1 mit dem Gassack 10 in einem entfalteten Zustand gezeigt.

Nach einer Sensierung eines möglichen Aufpralls einer Person auf den vorderen Bereich des Fahrzeugs (durch eine hierzu vorgesehene Sensoreinrichtung) und der daraus resultierenden Aktivierung des Gasgenerators 130 wurden die durch diesen freigesetzten Gase über die Gasleitung 140 in den Gassack 10 eingeleitet. Der sich dadurch befüllende Gassack 10 hat die Umhüllung 16 sowie die Verkleidungselemente der Gassackanordnung 1 an der A-Säule 22 geöffnet, sodass der Gassack 10 zusammen mit dem ihn umgebenden Gewebeschlauch 11 aus deren Unterbringungsraum hervortreten konnte.

Der Gassack 10, anfangs nur im Bereich des unteren Endes 111 innerhalb des Gewebeschlauches 11 angeordnet, hat sich anschließend entlang dessen Erstreckungsrichtung (entlang der A-Säule) in dem Gewebeschlauch 11 bis zu dessen oberen Ende 110 entfaltet. Durch das Befüllen des Gassacks 10 ist dieser somit innerhalb des Gewebeschlauchs 11 von einem Ende (hier dem unteren Ende 111) des Gewebeschlauchs 11 zum anderen Ende (hier dem oberen Ende 110) des Gewebeschlauchs 11 entfaltbar.

In dem in Fig. 2 gezeigten, entfalteten Zustand füllt der Gassack 10 den Gewebeschlauch 11 voll oder im Wesentlichen voll aus.

Der Gewebeschlauch 11 weist eine netzartige Struktur 112 auf. Die netzartige Struktur 112 umfasst Maschen. Die Maschen sind in Längserstreckungsrichtung des Gewebeschlauches 11 gespreizt und/oder quer zur Längserstreckungsrichtung des Gewebeschlauches 11 zusammengelegt. Mit dem Ausfüllen des Gewebeschlauches 11 wird dieser quer zur Erstreckungsrichtung der A-Säule 22 aufgeweitet. Bedingt durch seine netzartige Struktur 112 (z.B. durch ein Aufspreizen der zusammengelegten Maschen quer zur Erstreckungsrichtung der A-Säule 22) verkürzt sich dabei der Gewebeschlauch 11 in seiner Längserstreckungsrichtung (entlang der Erstreckungsrichtung der A-Säule 22).

Infolge der Verkürzung verspannt sich der Gewebeschlauch 11 zwischen seinen beiden endseitigen Befestigungspunkten am Kraftfahrzeug 2. Dabei werden die beiden Haltebänder 121 gestrafft und Zugkräfte in die Befestigungspunkte eingeleitet. Die dabei auftretenden Kräfte sind (durch entsprechende Einrichtung der Gassackanordnung 1) derart ausgelegt, dass dadurch der untere Befestigungspunkt des dem unteren Ende 111 zugeordneten Haltebandes 121 am Scharnier 15 in Richtung der A-Säule 22 bewegt wird. Dem vorausgehend erfolgt eine Entriegelung des Scharniers 15 dergestalt, dass eine Bewegung der Scharnierelemente 151, 153 (und abweichend von der oben für Wartungsarbeiten geschilderten) möglich ist. Die Entriegelung des Scharniers 15 erfolgt durch einen Zug am Halteband 121 bzw. durch eine separat angesteuerte Vorrichtung.

Auftretende Kräfte und die konstruktive Auslegung des Scharniers 15 bewirken ein Anheben der Motorhaube 20 nach oben entlang der Fahrzeughöhenachse z. Der sich dadurch ergebende Abstand zwischen der Motorhaube 20 und darunterliegenden Fahrzeugkomponenten ermöglicht bei einem Aufprall einer Person eine ausreichend freie Deformation der Motorhaube 20. Hierdurch kann die Gefahr von Verletzungen für die Person wesentlich vermindert werden. In Fig. 2 ist gezeigt, dass die Motorhaube 20 gegenüber einer Öffnung 280 eines Motorraums 28 angehoben ist, sodass die Motorhaube 20 einen gegenüber Fig. 1 vergrößerten Abstand zum Motorraum 28 aufweist.

Das Anheben der Motorhaube 20 geht vorliegend einher mit einer Verlagerung der Motorhaube 20 entgegen einer Fahrzeuglängsrichtung auf der Fahrzeuglängsachse x, in Richtung der Windschutzscheibe 23. So können zusätzlich untere Bereiche der Windschutzscheibe 23 und/oder daran angrenzende Teile des Fahrzeugs 2 (z.B. ein Windlauf 25) abgedeckt werden, was einen Schutz für eine im Crashfall aufprallende Person weiter verbessert.

Der aufgeblasene und entfaltete Gassack 10 überdeckt die A-Säule 22 und stellt hierdurch eine Polsterung der A-Säule 22 bereit. Hierdurch wird der Schutz für eine im Crashfall aufprallende Person noch weiter verbessert.

Fig. 4 zeigt den Gassack 10 der Gassackanordnung 1 in einer bevorzugten Ausführung als Mehrkammersack. Vorliegend besteht der Gassack aus einer ersten Kammer 103 sowie einer diese teilweise umgebenden zweiten Kammer 104. Die erste Kammer 103 verläuft ausgehend von einem als Gaseinlass 100 ausgebildeten Bereich mit einem ersten Abschnitt 101 außerhalb der zweiten Kammer 104. Ein daran anschließender zweiter Abschnitt 102 ragt in die zweite Kammer 104 hinein. Entlang der Längserstreckung der ersten Kammer 103 reicht deren zweiter Abschnitt 102 nahezu bis zum Ende der zweiten Kammer 104.

Die erste Kammer 103 ist länglich ausgebildet und erstreckt sich von ihrem Gaseinlass 100 bis zu einem dem Gaseinlass gegenüberliegenden verschlossenen Ende. Im zweiten Abschnitt 102 ist die erste Kammer 103 mit einer Öffnung 105 versehen. Durch die Öffnung 105 strömen vom Gasgenerator 130 freigesetzte und über den Gaseinlass 100 eingeleitete Gase von der ersten Kammer 103 in die zweite Kammer 104. Die Öffnung 105 bildet eine Durchtrittsöffnung für Gase von der ersten Kammer 103 in die zweite Kammer 104. Entlang der Längserstreckung der ersten Kammer 103 ist die Öffnung 105 in einem deren verschlossenen Ende zugewandten Bereich angeordnet.

Beide Kammern 103, 104 können aus jeweils zwei deckungsgleichen Zuschnitten bestehen, die entlang ihrer Ränder zumindest teilweise miteinander verbunden (z.B. vernäht) sind. Zur Fertigstellung des Gassackes werden beide Kammern miteinander verbunden (z.B. vernäht).

Quer zu ihrer Längserstreckung weist die erste Kammer 103 einen im Vergleich zur zweiten Kammer 104 (insbesondere wesentlich) geringen Querschnitt auf. Insbesondere im Zusammenhang mit den weiter oben beschriebenen Details ermöglicht das, dass sich die erste Kammer 103 bei der Befüllung problemlos in dem den Gassack 10 umgebenden Gewebeschlauch 11 (von dessen unteren Ende 111 zum oberen Ende 110) entfalten kann. Bei dem Entfalten der ersten Kammer 103 wird auch die nicht oder nur geringfügig befüllte zweite Kammer 104 im Gewebeschlauch 11 entlang der Längserstreckung des Gewebeschlauchs 11 (hier die Erstreckungsrichtung entlang der A-Säule 22) positioniert. Die erste Kammer 103 und die zweite Kammer 104 sind zeitlich versetzt entfaltbar, z.B. dient die Öffnung 105 hierbei als Drossel.

Im Wesentlichen erst nach der vollständigen Streckung (durch die Befüllung) der ersten Kammer 103 gelangen die Gase in die vorpositionierte zweite Kammer 104 und befüllen auch 0 diese. Über die Befüllung der zweiten Kammer 104 wird eine weitere Dehnung des Gewebeschlauches 11 quer zu seiner Erstreckungsrichtung bewirkt, wobei dessen maximale Ausdehnung in dieser Richtung durch den Querschnitt der zweiten Kammer 104 festgelegt wird. Die Dehnung des Gewebeschlauchs 11 bewirkt die Verkürzung des Gewebeschlauchs. Die Verkürzung des Gewebeschlauchs 11 leitet Zugkräfte in die untere Befestigungsstelle 200 an der Motorhaube 20 ein. Über den Querschnitt der zweiten Kammer 104 sind die maximale Ausdehnung des Gewebeschlauches quer zu seiner Erstreckungsrichtung und damit die in die Motorhaube 20 eingeleiteten Kräfte einstellbar.

Fig. 5 zeigt eine mögliche Befestigung eines Haltebandes 121 am Gewebeschlauch 11 mittels einer Schelle 122.

Das zu befestigende Ende (hier beispielhaft das obere Ende 110) des Gewebeschlauches 11 wird zusammengefasst (z.B. gerafft) und das Halteband 121 durch die Schelle 122 an dem Ende festgeklemmt (insbesondere kraftschlüssig). Alternativ oder zusätzlich zum Raffen kann der Gewebeschlauch 11 an seinen Enden 110, 111 entsprechend insbesondere zusammenlaufend gewebt sein. Um zu verhindern, dass bei einer Einleitung von Kräften das Ende des Haltebandes 121 unter der Schelle 122 hindurchgezogen wird, ist das Halteband 121 beispielsweise einmal umgeschlagen. Die übereinander liegenden Bereiche des Haltebandes 121 werden (z.B. partiell) miteinander vernäht. Die vernähten Bereiche bilden so im montierten Zustand vorzugsweise eine zusätzlich formschlüssige Verbindungzur Sicherung des Haltebandes 121.

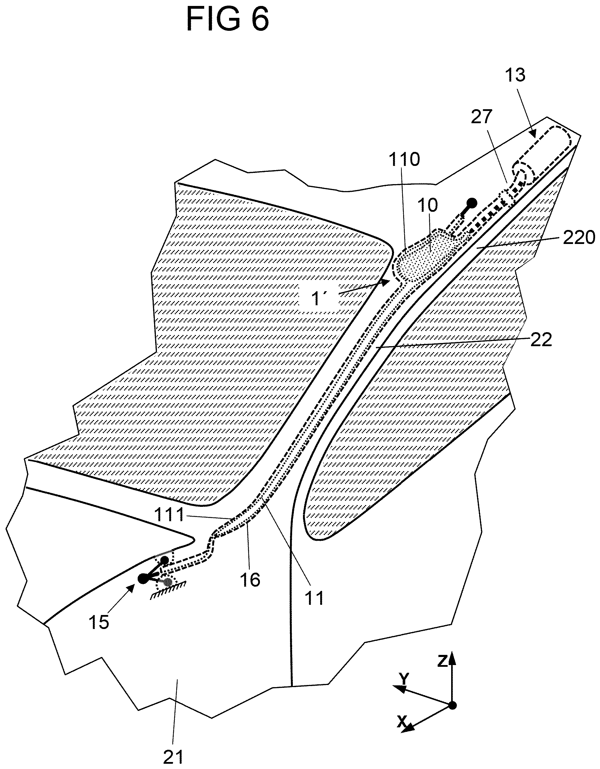

Die Darstellung gemäß Fig. 6 zeigt eine alternative Einbaulage der Gassackanordnung 1' die hier mit ihrem gasgeneratorseitigen Ende 110 fahrzeugfest (z.B. an einem Dachholm 27) im Randbereich des Fahrzeugdaches 24 in der Nähe des oberen Endes 220 der A-Säule 22 angeordnet ist. Ausgehend davon erstreckt sie sich über das obere Ende 220 der A-Säule 22, entlang dieser, bis zu deren unterem Ende 221 oder einen an den Kotflügels 21 angrenzenden Bereich. Der Gassack 10 ist hier anfangs nur im Bereich des oberen Endes 110 des Gewebeschlauches 11 innerhalb des Gewebeschlauches 11 angeordnet. Demzufolge entfaltet sich der Gassack 10 im Gewebeschlauch 11 vorliegend entlang der A-Säule 22 bis zu dessen unteren Ende 221. Im nicht gezeigten aufgeblasenen Zustand füllt der Gassack 10 den Gewebeschlauch 11 voll oder im Wesentlichen voll aus (vergleichbar mit dem Zustand der Gassackanordnung 1 gemäß Fig. 2). Im Übrigen gelten die im Zusammenhang mit der Ausführung der Gassackanordnung 1 gemäß Fig. 1-3 erfolgten Erläuterungen entsprechend auch für die in Fig. 5 gezeigte Gassackanordnung 1'.

## Patentansprüche

1. Gassackanordnung für ein Kraftfahrzeug (2), mit
- einem Gassack (10), welcher durch Befüllen mit einem Gas entfaltbar ist, und
- einer Einhüllung (11), in der der Gassack (10) vor und nach dem Befüllen angeordnet ist,
wobei der Gassack (10) so beschaffen und am Kraftfahrzeug (2) anzuordnen ist, dass er sich vor dem Befüllen im Bereich eines ersten Endes (110, 220; 111, 221) der Einhüllung (11) und einer Fahrzeugsäule (22) des Kraftfahrzeugs (2) befindet und durch das Befüllen innerhalb der Einhüllung (11) und entlang zumindest eines Abschnitts der Fahrzeugsäule (22) hin zu einem zweiten Ende (110, 220; 111, 221) der Einhüllung (11) und der Fahrzeugsäule (22) entfaltbar ist.

2. Gassackanordnung nach Anspruch 1,
**gekennzeichnet durch** mindestens eine am ersten und/oder am zweiten Ende (110, 111) der Einhüllung (11) angebrachte Befestigungseinrichtung (12A, 12B), mit der die Einhüllung (11) an einem bewegbaren Teil des Kraftfahrzeugs (2) festlegbar oder festgelegt ist.

3. Gassackanordnung nach Anspruch 2,
**dadurch gekennzeichnet, dass**
es sich bei dem bewegbaren Teil um eine Fahrzeughaube (20) oder ein der Fahrzeughaube (20) zugeordnetes Scharnier (15) handelt.

4. Gassackanordnung nach einem der vorhergehenden Ansprüche,
**dadurch gekennzeichnet, dass**
sich der Gassack (10) vor dem Befüllen nur über höchstens die Hälfte oder höchstens ein Drittel der Längsausdehnung der Einhüllung (11) und der Längsausdehnung der Fahrzeugsäule (22) erstreckt.

5. Gassackanordnung nach einem der vorhergehenden Ansprüche,
**dadurch gekennzeichnet, dass**
sich der Gassack (10) im befüllten Zustand über mindestens ein Drittel oder mindestens die Hälfte der Längsausdehnung der Einhüllung (11) und der Fahrzeugsäule (22) erstreckt.

6. Gassackanordnung nach einem der vorhergehenden Ansprüche,
**dadurch gekennzeichnet, dass**
der Gassack (10) vor dem Befüllen an oder in einem bezogen auf die Fahrzeughöhenrichtung (z) unteren oder oberen Endabschnitt der Fahrzeugsäule (22) anzuordnen ist.

7. Gassackanordnung nach einem der vorhergehenden Ansprüche,
**dadurch gekennzeichnet, dass**
es sich bei der Einhüllung (11) um einen Gewebeschlauch handelt.

8. Gassackanordnung nach einem der vorhergehenden Ansprüche,
**dadurch gekennzeichnet, dass**
die Einhüllung (11) ein netzartiges Material umfasst oder aus einem netzartigen Material besteht.

9. Gassackanordnung nach einem der vorhergehenden Ansprüche,
**dadurch gekennzeichnet, dass**
die Einhüllung (11) länglich mit einer Längsausdehnung ausgebildet ist und ein Befüllen des Gassacks eine Verkürzung der Längsausdehnung der Einhüllung (11) bewirkt.

10. Gassackanordnung nach einem der vorhergehenden Ansprüche,
**dadurch gekennzeichnet, dass**
sich die Einhüllung (11) bei bestimmungsgemäß am Kraftfahrzeug (2) montierter Gassackanordnung (1, 1') entlang der Fahrzeugsäule (22) erstreckt.

11. Gassackanordnung nach einem der vorhergehenden Ansprüche,
**dadurch gekennzeichnet, dass**
der Gassack (10) und/oder die Einhüllung (11) zumindest abschnittsweise von einer zumindest teilweise flexiblen Umhüllung (16) umgeben sind.

12. Gassackanordnung nach Anspruch 11,
**dadurch gekennzeichnet, dass**
die Umhüllung (16) als unter Hitzeeinwirkung schrumpfende Umhüllung ausgebildet ist.

13. Gassackanordnung nach einem der vorhergehenden Ansprüche,
**dadurch gekennzeichnet, dass**
der Gassack (10) mindestens zwei Kammern (103, 104) aufweist.

14. Gassackanordnung nach Anspruch 13,
**dadurch gekennzeichnet, dass**
eine der Kammern (104) die andere Kammer (103) umgibt.

15. Kraftfahrzeug (2), **gekennzeichnet durch** zumindest eine Gassackanordnung (1; 1') nach einem der vorhergehenden Ansprüche

## Claims

1. Gas bag assembly for a motor vehicle (2), comprising
- a gas bag (10), which can be unfolded by filling same with a gas, and
- an enclosing element (11), in which the gas bag (10) is arranged before and after being filled, wherein
the gas bag (10) is designed and arranged on the motor vehicle (2) such that it is located in the region of a first end (110, 220; 111, 221) of the enclosing element (11) and a vehicle pillar (22) of the motor vehicle (2) before being filled and can be unfolded inside the enclosing element (11) and along at least one portion of the vehicle pillar (22) towards a second end (110, 220; 111, 221) of the enclosing element (11) and the vehicle pillar (22) by being filled.

2. Gas bag assembly according to claim 1,
**characterised by** at least one fastening means (12A, 12B) attached on the first and/or second end (110, 111) of the enclosing element (11), by means of which fastening means the enclosing element (11) is or can be secured to a movable part of the motor vehicle (2).

3. Gas bag assembly according to claim 2, **characterised in that**
the movable part is a vehicle bonnet (20) or a hinge (15) assigned to the vehicle bonnet (20).

4. Gas bag assembly according to any of the preceding claims, **characterised in that**,
before being filled, the gas bag (10) only extends over at most one half or at most one third of the longitudinal extent of the enclosing element (11) and of the longitudinal extent of the vehicle pillar (22).

5. Gas bag assembly according to any of the preceding claims, **characterised in that**,
when filled, the gas bag (10) extends over at least one third or at least one half of the longitudinal extent of the enclosing element (11) and of the vehicle pillar (22).

6. Gas bag assembly according to any of the preceding claims, **characterised in that**,
before being filled, the gas bag (10) is to be arranged on or in an end portion of the vehicle pillar (22) that is at the top or bottom in the vehicle vertical direction (z).

7. Gas bag assembly according to any of the preceding claims, **characterised in that**
the enclosing element (11) is a fabric tube.

8. Gas bag assembly according to any of the preceding claims, **characterised in that**
the enclosing element (11) comprises a net-like material or consists of a net-like material.

9. Gas bag assembly according to any of the preceding claims, **characterised in that**
the enclosing element (11) is designed to be elongate with a longitudinal extent and filling of the air bag causes the longitudinal extent of the enclosing element (11) to shorten.

10. Gas bag assembly according to any of the preceding claims, **characterised in that**
the enclosing element (11) extends along the vehicle pillar (22) when the gas bag assembly (1, 1') is mounted as intended on the motor vehicle (2).

11. Gas bag assembly according to any of the preceding claims, **characterised in that**
the gas bag (10) and/or the enclosing element (11) are surrounded at least in portions by an at least partially flexible enveloping element (16).

12. Gas bag assembly according to claim 11,
**characterised in that**
the enveloping element (16) is designed as an enveloping element that shrinks under the influence of heat.

13. Gas bag assembly according to any of the preceding claims, **characterised in that**
the gas bag (10) comprises at least two chambers (103, 104).

14. Gas bag assembly according to claim 13,
**characterised in that**
one of the chambers (104) surrounds the other chamber (103).

15. Motor vehicle (2), **characterised by** at least one
Gas bag assembly (1; 1') according to any of the preceding claims.

## Revendications

1. Système de sac gonflable pour un véhicule à moteur (2), comprenant
- un sac gonflable (10) qui peut se déplier en étant rempli d'un gaz, et
- une enveloppe (11), dans laquelle le sac gonflable (10) est disposé avant et après le remplissage,
le sac gonflable (10) étant conçu et installé dans le véhicule à moteur (2) de manière à ce qu'il se trouve avant le remplissage dans une zone d'une première extrémité (110, 220, 111, 221) de l'enveloppe (11) et d'un montant (22) du véhicule à moteur (2) et pouvant se déplier par le remplissage de l'enveloppe (11) et le long d'au moins une partie du montant (22) vers une seconde extrémité (110, 220, 111, 221) de l'enveloppe (11) et du montant (22) de véhicule.

2. Système de sac gonflable selon la revendication 1, **caractérisé par** au moins un dispositif de fixation (12A, 12B) appliqué sur la première et/ou la seconde extrémité (110, 111) de l'enveloppe (11), avec lequel l'enveloppe est fixée ou peut être fixée sur une partie mobile du véhicule à moteur (2).

3. Système de sac gonflable selon la revendication 2, **caractérisé en ce que** la partie mobile est un capot de véhicule (20) ou une charnière (15) associée au capot de véhicule.

4. Système de sac gonflable selon l'une quelconque des revendications précédentes, **caractérisé en ce que** le sac gonflable (10) avant le remplissage ne s'étend uniquement sur au plus la moitié ou au plus le tiers de la dilatation linéaire de l'enveloppe (11) et de la dilatation linéaire du montant (22) du véhicule.

5. Système de sac gonflable selon l'une quelconque des revendications précédentes, **caractérisé en ce que** le sac gonflable (10) s'étend lorsqu'il est rempli sur au moins un tiers ou au moins la moitié de la dilatation linéaire de l'enveloppe (11) et du montant (22) de véhicule.

6. Système de sac gonflable selon l'une quelconque des revendications précédentes, **caractérisé en ce que** le sac gonflable (10) doit être disposé, avant le remplissage, sur ou dans une partie d'extrémité inférieure ou supérieure du montant (22) du véhicule, par rapport à la direction vers le haut de véhicule (z).

7. Système de sac gonflable selon l'une quelconque des revendications précédentes, **caractérisé en ce que** l'enveloppe (11) est un tube en tissu.

8. Système de sac gonflable selon l'une quelconque des revendications précédentes, **caractérisé en ce que** l'enveloppe (11) comprend un matériau réticulaire ou se compose d'un matériau réticulaire.

9. Système de sac gonflable selon l'une quelconque des revendications précédentes, **caractérisé en ce que** l'enveloppe (11) est conçue dans le sens de la longueur d'une dilatation linéaire et le remplissage du sac gonflable réduit de la dilatation linéaire de l'enveloppe (11).

10. Système de sac gonflable selon l'une quelconque des revendications précédentes, **caractérisé en ce que** l'enveloppe (11) s'étend le long du montant (22) du véhicule lorsque le système de sac gonflable (1, 1') est monté de manière conforme sur le véhicule à moteur (2).

11. Système de sac gonflable selon l'une quelconque des revendications précédentes, **caractérisé en ce que** le sac gonflable (10) et/ou le remplissage (11) sont entourés au moins à certains endroits par une enveloppe (16) au moins partiellement souple.

12. Système de sac gonflable selon la revendication 11, **caractérisé en ce que** l'enveloppe (16) est conçue sous la forme d'une enveloppe se rétrécissant sous l'action de la chaleur.

13. Système de sac gonflable selon l'une quelconque des revendications précédentes, le sac gonflable (10) présentant au moins deux chambres (103, 104).

14. Système de sac gonflable selon la revendication 13, **caractérisé en ce que** l'une des chambre (104) entourant l'autre chambre (103).

15. Véhicule à moteur (2), **caractérisé par** au moins un système de sac gonflable (1, 1') selon l'une quelconque des revendications précédentes.
